(19) Europäisches Patentamt / European Patent Office / Office européen des brevets

(11) **EP 2 218 556 B1**

(12) **EUROPÄISCHE PATENTSCHRIFT**

(45) Veröffentlichungstag und Bekanntmachung des Hinweises auf die Patenterteilung:
**09.04.2014 Patentblatt 2014/15**

(51) Int Cl.:
***B25J 9/16*** *(2006.01)*

(21) Anmeldenummer: **10000703.8**

(22) Anmeldetag: **25.01.2010**

(54) **Steuerung und Steuerungsverfahren für einen Manipulator**

Controller and control method for a manipulator

Commande et procédé de commande pour un manipulateur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.02.2009 DE 102009007026**

(43) Veröffentlichungstag der Anmeldung:
**18.08.2010 Patentblatt 2010/33**

(73) Patentinhaber: **KUKA Laboratories GmbH 86165 Augsburg (DE)**

(72) Erfinder:
• **Sonner, Christian 80797 München (DE)**
• **Zimmermann, Uwe, Dr. 86152 Augsburg (DE)**

(74) Vertreter: **Schlotter, Alexander Carolus Paul Wallinger Ricker Schlotter Tostmann Patent- und Rechtsanwälte Zweibrückenstrasse 5-7 80331 München (DE)**

(56) Entgegenhaltungen:
**WO-A1-97/29890    US-A- 5 811 952**

• **SCHREIBER G ET AL: "Solving the singularity problem of non-redundant manipulators by constraint optimization", INTELLIGENT ROBOTS AND SYSTEMS, 1999. IROS '99. PROCEEDINGS. 1999 IEEE /RSJ INTERNATIONAL CONFERENCE ON KYONGJU, SOUTH KOREA 17-21 OCT. 1999, PISCATAWAY, NJ, USA,IEEE, US, Bd. 3, 17. Oktober 1999 (1999-10-17), Seiten 1482-1488, XP010362398, DOI: 10.1109/IROS.1999.811688 ISBN: 978-0-7803-5184-4**
• **PARK T H ET AL: "An approach to robot motion analysis and planning for conveyor tracking", PROCEEDINGS OF THE INTERNATIONAL CONFERENCE ON ROBOTICS AND AUTOMATION SACRAMENTO, APR. 9 - 11, 1991; [PROCEEDINGS OF THE INTERNATIONAL CONFERENCE ON ROBOTICS AND AUTOMATION], LOS ALAMITOS, IEEE COMP. SOC. PRESS, US, Bd. CONF. 7, 9. April 1991 (1991-04-09), Seiten 70-75, XP010023863, DOI: 10.1109/ROBOT.1991.131555 ISBN: 978-0-8186-2163-5**

EP 2 218 556 B1

**Beschreibung**

Die vorliegende Erfindung betrifft ein Verfahren zur Steuerung eines Manipulators, insbesondere eines Roboters, nach dem Oberbegriff des Anspruchs 1, sowie eine Steuerung für einen Manipulator zur Durchführung eines solchen Verfahrens.

In vielen Anwendungsfällen wird eine Soll-Bahn eines Manipulators vorab offline gespeichert, beispielsweise durch das Teachen von Positionen, die ein manipulatorfestes Referenzkoordinatensystem wie der Tool Center Point ("TCP") nacheinander anfahren soll. Beim Ausführen eines entsprechenden Arbeitsprogramms bestimmt dann ein Interpolator online aus der hieraus geplanten und abgespeicherten Bahn Soll-Inkremente für die einzelnen Gelenke des Manipulators. Die Manipulatorsteuerung versucht, diese Soll-Inkremente in dem durch die Bahnplanung vorgegebenen Zeitinkrement zu realisieren.

Dies ist nicht immer möglich, da beispielsweise Gelenkantriebe die hierzu erforderlichen Kräfte und Momente nicht aufbringen können. In der heutigen Praxis wird daher üblicherweise die Bahngeschwindigkeit manuell so lange reduziert, bis Momenten- und andere Begrenzungen eingehalten werden können. Dieses sogenannte Override-Verfahren ist beispielsweise in der DE 199 59 330 A1 der Anmelderin erwähnt.

"Solving the Singularity Problem of non-redundant Manipulators by Constraint Optimization" (G. Schreiber et al., DLR) betrifft eine Lösung für das Singularitätsproblem für nicht-redundante Manipulatoren durch eine Optimierung mit Nebenbedingungen. Ziel ist es, das Steuerungsverhalten eines gelenkigen Roboters in den Bereichen seiner kinematischen Singularitäten so zu beeinflussen, dass physikalische Grenzwerte des Manipulators insbesondere Gelenksgeschwindigkeiten und Gelenkbeschleunigungen nicht überschritten werden.

Die US 5 811 952 A betrifft ein Verfahren zur Definition einer Beschleunigung bzw. einer Verzögerung bei einer Bewegung eines Roboters. Ziel ist es, Störmomente, welche durch Nichtlinearitäten des Roboters begründet sind, insbesondere Trägheitsmomente und Reibungsmomente, zu berücksichtigen und einen Bahnfehler zu verringern. Dazu wird vorgeschlagen, auf Basis der Bewegungsgleichungen des Roboters die Störmomente zu berechnen, welche durch den Roboter begründet sind.

"An Approach to Robot Motion Analysis and Planning for Conveyor Tracking" (T. H. Park, B. H. Lee, Seoul National University) betrifft ein Verfahren zur Analyse von Roboterbewegungen und zum Planen einer Fließband-Nachführung durch einen Roboter. Ziel ist es, eine Fließband-Nachführung ohne signifikanten Bahnfehler im eingeschwungenen Zustand der Bahnregelung bereitzustellen und dabei auf physikalische Begrenzungen des Roboters Rücksicht zu nehmen. Der Roboter wird als Differenzialgleichungen 2. Ordnung modelliert. Die Begrenzungen der aufbringbaren Gelenkmomente sowie Gelenkgeschwindigkeiten, -beschleunigungen und -rücke werden berücksichtigt.

Die WO 97/29890 A1 offenbart ein Verfahren zur Regelung eines Industrieroboter entlang einer vorgegebenen Bahn. Ziel ist es, die mechanische Struktur des Roboters vor Überlast zu schützen. Weiterhin soll vermieden werden den Roboter durch Auslegung auf das schlechteste Szenario nur unnötig langsam verfahren zu lassen. Es wird vorgeschlagen, die mechanisch kritischen Teile des Roboters zu überwachen, während die Achsen mit maximal möglichem Moment beschleunigt werden.

Aufgabe der vorliegenden Erfindung ist es, das Verhalten eines Manipulators beim Abfahren einer gespeicherten Bahn zu verbessern.

Diese Aufgabe wird durch ein Verfahren mit den Merkmalen des Anspruchs 1 bzw. eine Steuerung mit den Merkmalen des Anspruchs 13 gelöst. Anspruch 14, 15 stellen ein entsprechendes Computerprogramm bzw. Computerprogrammprodukt, insbesondere ein Speichermedium oder Datenträger, unter Schutz, die Unteransprüche betreffen vorteilhafte Weiterbildungen.

Erfindungsgemäß wird vorgeschlagen, die Dynamik des Manipulators online während der Ausführung einer Bahn zu berücksichtigen. Verbietet die Dynamik das exakte Abfahren einer gespeicherten Bahn mit einer vorgegebenen Geschwindigkeit, kann automatisch in vorgegebener Weise von der Bahn abgewichen und/oder die Bahngeschwindigkeit reduziert werden. Besonders bevorzugt wird diese Reaktion online durch eine Mehrkriterienoptimierung festgelegt.

Hierzu wird zunächst eine Soll-Bahn abgespeichert, beispielsweise als Folge von Soll-Positionen

$$\mathbf{r}_s = \left\{ \mathbf{r}_{s,1}, \mathbf{r}_{s,2}, \ldots \right\} \qquad (1)$$

oder in Form parametrisierter Funktionen, etwa von höhergradigen Spline-Polynomen für die Soll-Position über der Zeit t oder einem Bahnparameter s:

$$\mathbf{r}_s[s(t)] = \sum_{i=0} \mathbf{a}_i \cdot t^i \qquad (2),$$

wobei eine Soll-*Position* bevorzugt im kartesischen Arbeitsraum des Manipulators definiert ist und die *Lage* eines manipulatorfesten Referenzkoordinatensystems, insbesondere des TCPs, gegenüber dem Ursprung eines Bezugssystems, beispielsweise in kartesischen Koordinaten (x, y, z), und/oder seine *Orientierung* gegenüber einem solchen Bezugssystem, beispielsweise in EULER- oder KARDAN-Winkeln ($\alpha$, $\beta$, $\gamma$) beschreiben kann:

$$\mathbf{r}_s[s(t)] = \begin{bmatrix} x & y & z & \alpha & \beta & \gamma \end{bmatrix}^T \qquad (3)$$

Gleichermaßen kann eine Soll-Position auch direkt in Gelenkkoordinaten $\mathbf{q} = [q_1,...q_a]^T$ definiert sein, die die Stellung von a Gelenken des Manipulators beschreiben, beispielsweise die Winkellagen der Drehgelenke eines Knickarmroboters, wobei die Jacobi-Matrix $\mathbf{J}$ die Transformation zwischen der Positionsänderung $\Delta\mathbf{r}$ eines manipulatorfesten Referenzkoordinatensystems und der Gelenkkoordinatenänderung $\Delta\mathbf{q}$ vermittelt:

$$\Delta\mathbf{r} = \mathbf{J} \cdot \Delta\mathbf{q} \qquad (4)$$

Während des Abfahrens der Bahn bestimmt ein Interpolator zu einem Zeitpunkt t online Soll-*Inkremente,* um die in einem Zeitinkrement $\Delta\mathbf{t}$ die aktuelle Position des Manipulators zu ändern ist, um die gespeicherte Soll-Bahn abzufahren. Diese Soll-Inkremente können im Arbeitsraum oder, bevorzugt, in den Gelenkkoordinaten bestimmt werden, so dass sie als Soll-Werte von Gelenkantriebssteuerungen dienen können:

$$\Delta\mathbf{q}_s(t) \qquad (5)$$

Als Steuerung wird vorliegend verallgemeinernd auch eine Regelung bezeichnet, beispielsweise eine PID-Einzelgelenkregelung oder dergleichen, der die einzelnen $\Delta\mathbf{q}_i(\mathbf{t})$ als Soll-Achswinkelupdates zugeführt werden.

Der Interpolator kann beispielsweise zunächst durch Interpolation zwischen gespeicherten Positionen oder durch Auswertung einer gespeicherten Funktion eine Soll-*Bewegung* $\Delta\mathbf{r}_s(t)$ für ein Zeitinkrement $\Delta\mathbf{t}$ bestimmen:

$$\Delta\mathbf{r}_s(t) = \mathbf{r}_s(t + \Delta t) - \mathbf{r}(t) \qquad (6)$$

Herkömmlicherweise werden aus (4) und (6) dann die Soll-Inkremente $\Delta\mathbf{q}_s(t)$ bestimmt, indem die Gleichung

$$\Delta\mathbf{r}_s(t) = \mathbf{J} \cdot \Delta\mathbf{q}_s(t) \qquad (7)$$

gelöst wird. Dabei kann es jedoch vorkommen, dass die solcherart bestimmten Soll-Inkremente $\Delta\mathbf{q}_s(t)$ in dem Zeitinkrement $\Delta t$ nicht realisiert werden können, da sie beispielsweise zu hohe Kräfte und Momente in den Antrieben erfordern. Erfindungsgemäß werden daher die Soll-Inkremente während des Abfahrens der Bahn auf Basis bzw. unter Berücksichtigung der Dynamik des Manipulators, insbesondere eines, vorzugsweise linearisierten, Modells des Manipulators bestimmt.

Die Dynamik eines Manipulators kann durch seine Bewegungsgleichung

$$\mathbf{M} \cdot \frac{d^2\mathbf{q}}{dt^2} + \mathbf{h}\left(\mathbf{q}, \frac{d\mathbf{q}}{dt}\right) = \tau \qquad (8)$$

mit der Massenmatrix **M**, der n-ten Zeitableitung d $^n$/dt$^n$, den Antriebskräften $\tau = [\tau_1,... \tau_A]^T$ in den Gelenken, wobei vorliegend verallgemeinernd auch Drehmomente, beispielsweise von Antriebsmotoren, als Kräfte bezeichnet werden, und dem Vektor **h** modelliert werden, der Gewichts-, Reibungs-, gyroskopische und ähnliche Kräfte beinhaltet. Allgemein wird jede mathematische Verknüpfung zwischen Positionen, insbesondere Gelenkkoordinaten, Zeitableitungen hiervon und Antriebskräften als Modell im Sinne der vorliegenden Erfindung bezeichnet, insbesondere tabellarisch oder als parametrisierte Funktionen abgespeicherte Relationen.

Indem die Bewegungsgleichung und/oder die Zeitableitungen linearisiert bzw. diskretisiert werden, zum Beispiel gemäß:

$$\frac{d\mathbf{q}}{dt} \approx \frac{\Delta\mathbf{q}_s(t)}{\Delta t} \quad (9.1)$$

$$\frac{d^2\mathbf{q}}{dt^2} \approx \frac{\frac{\Delta\mathbf{q}_s(t)}{\Delta t} - \frac{d\mathbf{q}}{dt}}{\Delta t} \quad (9.2)$$

$$\tau = \mathbf{M}\cdot\frac{d^2\mathbf{q}(t)}{dt^2} + \mathbf{h}\left(\mathbf{q}(t),\frac{d\mathbf{q}(t)}{dt}\right) \approx$$
$$\mathbf{M}\left(\frac{\Delta\mathbf{q}_s(t)}{\Delta t^2} - \frac{d\mathbf{q}(t)/dt}{\Delta t}\right) + \mathbf{h}\left(\mathbf{q}(t),\frac{d\mathbf{q}(t)}{dt}\right) \quad (9.3)$$

kann daher unter Auswertung des Modells des Manipulators bestimmt werden, ob die zur Umsetzung der Soll-Inkremente $\Delta\mathbf{q}_s(t)$ erforderlichen Antriebskräfte $\tau$ zulässige Antriebsbegrenzungen übersteigen, indem etwa gemäß (7) Soll-Inkremente$\Delta\mathbf{q}_s(t)$ bestimmt werden und gemäß (9.1), (9.2) und (8) oder (9.3) geprüft wird, ob die Antriebskräfte, die sich nach dem Modell (8) bzw. (9.3) ergeben, innerhalb eines zulässigen Bereiches liegen:

$$\tau_{min} \leq \tau \leq \tau_{max} \quad (10)$$

Ist dies nicht der Fall, werden in einer bevorzugten Ausführung die Soll-Inkremente so bestimmt, dass sie von der Soll-Bewegung in einer vorgegebener Weise abweichen. Hierzu können die Soll-Inkremente beispielsweise als, insbesondere lineare, Abbildung der Soll-Bewegung bestimmt werden, indem sie beispielsweise mit einem Verkürzungsfaktor multipliziert werden:

$$(1-\vartheta)\cdot\Delta\mathbf{r}_s(t) = \mathbf{J}\cdot\Delta\mathbf{q}_s(t) \quad (11)$$

Es wird also die Soll-Bewegung, wie sie sich zunächst aus der Interpolation oder Auswertung der gespeicherten Soll-Bahn ergibt, solange verkürzt, bis die erforderlichen Antriebskräfte $\tau$, die sich aus der berücksichtigten Dynamik des Manipulators ergeben, innerhalb des zulässigen Bereiches liegen.

Gleichermaßen ist es auch möglich, andere Abweichungen von der Soll-Bewegung vorzugeben, in einer bevorzugten Ausführung beispielsweise durch die Vorgabe eines Schlauches um die Soll-Bewegung herum, innerhalb dessen die Soll-Inkremente liegen müssen. Dann wird die Soll-Bewegung, wie sie sich zunächst aus der Interpolation oder Auswertung der gespeicherten Soll-Bahn ergibt, solange innerhalb des vorgegebenen Schlauches variiert, bis beispielsweise die erforderlichen Antriebskräfte $\tau$, die sich aus der berücksichtigten Dynamik des Manipulators ergeben, innerhalb des zulässigen Bereiches liegen. Auch dies stellt eine Bestimmung der Soll-Inkremente als, gegebenenfalls lineare, Abbildung der Soll-Bewegung dar, wobei die Abbildung dann den vorgegeben Raum zulässiger Abweichungen, insbesondere einen Schlauch um die Soll-Bewegung beschreibt:

$$\Delta \mathbf{r}_s(t) \mapsto \Delta \mathbf{q}_s(t) = \Phi(\Delta \mathbf{r}_s(t)) \quad (11a)$$

Eine Parametrisierung dieser Abbildung gestattet dann deren Optimierung, i.e. das Bestimmen derjenigen Abweichung von der Soll-Bewegung, bei der die erforderlichen Antriebskräfte $\tau$, die sich aus der berücksichtigten Dynamik des Manipulators ergeben, innerhalb des zulässigen Bereiches liegen:

$$\Phi = \Phi(\vartheta) \quad (11b),$$

zum Beispiel

$$(1 - \vartheta_1) \cdot \Delta \mathbf{r}_s(t) + \vartheta_2 \cdot \mathbf{n}_{\Delta r}(t) + \vartheta_3 \cdot \mathbf{b}_{\Delta r}(t) = \mathbf{J} \cdot \Delta q_s(t)$$

mit dem Normalen- und dem Binormalenvektor $\mathbf{n}_{\Delta r}(t)$, $\mathbf{b}_{\Delta r}(t)$ auf die Soll-Bewegung oder anderen Vektoren, wobei die Abweichung zum Beispiel durch die Parameter $\vartheta$ und/oder die Wahl der Vektoren vorgegeben werden kann.

Zusätzlich oder alternativ kann auch eine Soll-Geschwindigkeit für das Zeitinkrement von einer Soll-Bewegungsgeschwindigkeit in vorgegebener Weise abweichen, wenn zur Umsetzung der Soll-Bewegung erforderliche Antriebskräfte zulässige Antriebskräfte übersteigen, indem etwa das Zeitinkrement vergrößert, die Soll-Bewegung verkleinert und/oder eine Bahngeschwindigkeit $\frac{ds(t)}{dt}$ reduziert wird.

Vorteilhafterweise können die Soll-Inkremente durch eine Optimierung bestimmt werden. Dabei können beispielsweise eine Abweichung

$$\Psi_1 = (1 - \vartheta) \cdot \Delta \mathbf{r}_s(t) - \mathbf{J}[\mathbf{q}(t)] \cdot \Delta \mathbf{q}_s(t) \quad (12.1a)$$

oder

$$\Psi_1 = (1 - \vartheta_1) \cdot \Delta \mathbf{r}_s(t) + \vartheta_2 \cdot \mathbf{n}_{\Delta r}(t) + \vartheta_3 \cdot \mathbf{b}_{\Delta r}(t) - \mathbf{J}[\mathbf{q}(t)] \cdot \Delta \mathbf{q}_s(t) \quad (12.1b)$$

zwischen Soll-Bewegung und Soll-Inkrementen in vorgegebener Weise, eine Reserve

$$\Psi_2 = \mathbf{M} \cdot \frac{d^2 \mathbf{q}(t)}{dt^2} + \mathbf{h}\left( \mathbf{q}(t), \frac{d\mathbf{q}(t)}{dt} \right) - \boldsymbol{\tau}_{zul} \quad (12.2)$$

zwischen zulässigen Antriebskräften und den Antriebskräften, die - insbesondere nach dem (linearisierten) Modell - zur Umsetzung der Soll-Bewegung erforderlich sind, eine Reserve

$$\Psi_3 = \left| \mathbf{J} \cdot \frac{\Delta \mathbf{q}_s(t)}{\Delta t} \right| - v_{zul} \quad (12.3)$$

zwischen Soll-Geschwindigkeit für das Zeitinkrement und einer zulässigen kartesischen Geschwindigkeit, eine Abweichung

$$\Psi_4 = \frac{\Delta \mathbf{q}_s(t)}{\Delta t} - \frac{d\mathbf{q}}{dt}\bigg|_s \quad (12.4)$$

zwischen Soll-Geschwindigkeit für das Zeitinkrement und Soll-Gelenkgeschwindigkeit, eine Reserve

$$\Psi_5 = \mathbf{q}_s - \mathbf{q}_{\text{singulär}} \quad (12.5)$$

zwischen durch Umsetzung der Soll-Inkremente eingenommenen und singulären Posen, zur Umsetzung der Soll-Bewegung erforderliche Antriebskräfte

$$\Psi_6 = \mathbf{M} \cdot \frac{d^2\mathbf{q}(t)}{dt^2} + \mathbf{h}\left(\mathbf{q}(t), \frac{d\mathbf{q}(t)}{dt}\right) = \tau \quad (12.6)$$

ein Abstand zwischen durch Umsetzung der Soll-Inkremente eingenommenen und bevorzugten Posen

$$\Psi_7 = \mathbf{J} \cdot \mathbf{q}_s - \mathbf{r}_{bevorzugt} \quad (12.7)$$

und/oder andere Größen als Gütekriterien optimiert werden.

Auf diese Weise kann zum Beispiel die Soll-Bewegung, wie sie sich aus der Interpolation oder Auswertung der gespeicherten Soll-Bahn ergibt, durch Bestimmen eines optimalen Skalierungsfaktors $\vartheta$ so verkürzt werden, dass die erforderlichen Antriebskräfte $\tau$, die sich aus der berücksichtigten Dynamik des Manipulators ergeben, innerhalb des zulässigen Bereiches liegen. Die einzelnen Gütekriterien können beispielsweise in Form einer Betragsnorm

$$\|\Psi_i\| \quad (13.1),$$

einer Minimal-, Maximal- oder Mittelnorm

$$\Psi_i = [\Psi_{1,i}, \Psi_{2,i}, \ldots \Psi_{n,i}] \Rightarrow \begin{cases} Min\{\Psi_{1,i}, \Psi_{2,i}, \ldots \Psi_{n,i}\} \\ Max\{\Psi_{1,i}, \Psi_{2,i}, \ldots \Psi_{n,i}\} \\ \dfrac{\Psi_{1,i} + \Psi_{2,i} + \ldots \Psi_{n,i}}{n} \end{cases} \quad (13.2),$$

oder dergleichen ausgewertet werden. Dabei können verschiedene, insbesondere konkurrierende Gütekriterien gleichermaßen als Straffunktionen oder als Gleichheits- oder Ungleichheitsnebenbedingung berücksichtigt und vorteilhafterweise in einer Mehrkriterienoptimierung ausgewertet werden, die gleichzeitig mehrere Gütekriterien optimiert, beispielsweise in einem Pareto-Optimierer, einer gewichteten Summe der Gütekriterien oder dergleichen.

Je nach Wahl der Gütekriterien, insbesondere je nach Gewichtung der Abweichung von der vorgegebenen Bahn, der Reserve zwischen den zur Realisierung erforderlichen und den maximal zulässigen Antriebskräften, und den dabei auftretenden Geschwindigkeiten, werden dann die Soll-Inkremente $\Delta \mathbf{q}_s(t)$ so bestimmt, dass der Manipulator seine maximal zulässigen Antriebskräfte und Geschwindigkeiten ausnutzt und, sofern diese zur Umsetzung der Soll-Inkremente $\Delta \mathbf{r}_s(t)$ nicht ausreichen, kontrolliert in einer definierten Richtung hiervon abweicht und/oder seine Geschwindigkeit reduziert.

Findet der Optimierer keine zulässige Lösung, weil beispielsweise die Soll-Bewegung zu stark verkürzt werden muss, um die zulässigen Antriebskräfte nicht zu überschreiten, kann eine entsprechende Meldung ausgegeben und/oder das Abfahren der Bahn gestoppt werden.

Der Einsatz eines Optimierers ist auch dann vorteilhaft, wenn der Manipulator redundant ist, insbesondere wenn er singuläre Positionen durchfährt. Denn durch Auswertung des Gütekriteriums (12.1) kann auch zu jeder singulären Position wenigstens ein Satz Gelenkkoordinaten gefunden werden. Ein Manipulator ist dabei bezüglich eines Abschnittes einer gespeicherten Soll-Bahn redundant, wenn er mehr Freiheitsgrade aufweist, als zur Realisierung einer Soll-Position im kartesischen Arbeitsraum erforderlich sind. Beispielsweise ist ein Manipulator mit sieben oder mehr Freiheitsgraden stets redundant, da eine Soll-Position im kartesischen Arbeitsraum durch die Vorgabe von drei Lage- und drei Orientierungskoordinaten bereits eindeutig beschrieben ist. Sind hingegen zur Beschreibung weniger als drei Lage- und drei Orientierungskoordinaten notwendig, weil beispielsweise die Orientierung bezüglich einer Achse nicht vorgegeben ist, ist auch ein Manipulator weniger Freiheitsgraden bezüglich dieser Soll-Positionen redundant.

Weitere Vorteile und Merkmale ergeben sich aus den Unteransprüchen und den Ausführungsbeispielen. Hierzu zeigt, teilweise schematisiert:

Fig. 1: einen eingelenkigen Roboter mit einer Steuerung nach einer Ausführung der vorliegenden Erfindung; und

Fig. 2: ein Steuerungsverfahren nach einer Ausführung der vorliegenden Erfindung

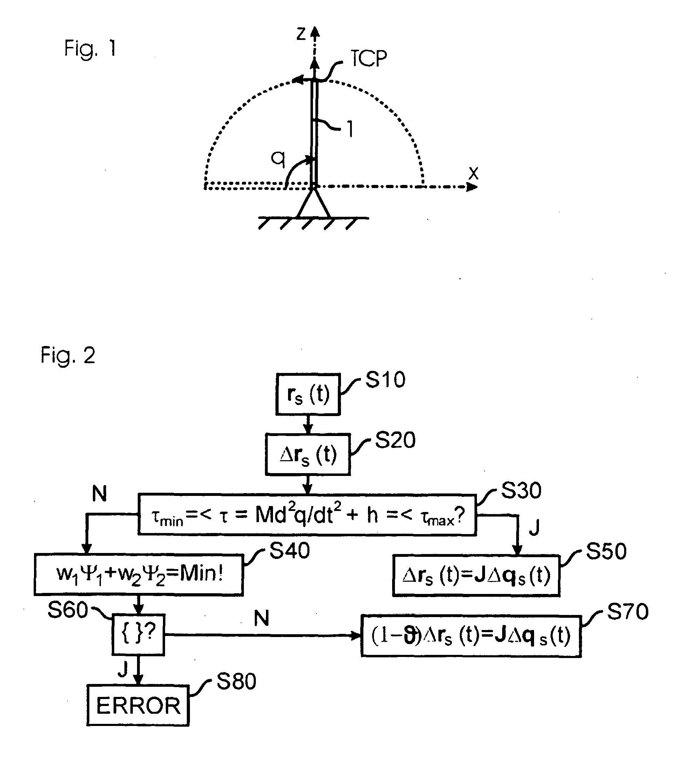

Fig. 1 zeigt in Form eines sehr einfachen Beispiel einen Roboter 1 mit einem einzigen Drehgelenk, der als Soll-Bahn innerhalb eines Zeitraums T einen Halbkreis in der x-z-Ebene des in Fig. 1 angedeuteten Bezugssystems abfahren soll.

In einem Schritt S10 (vgl. Fig. 2) wird hierzu zunächst die Soll-Bahn in Form parametrisierter Funktionen über der Zeit t abgespeichert:

$$\mathbf{r}_s(t) = \begin{bmatrix} -\cos\left(\dfrac{\pi \cdot t}{T}\right) \\ 0 \\ \sin\left(\dfrac{\pi \cdot t}{T}\right) \\ 0 \\ \pi \cdot \left(1 - \dfrac{t}{T}\right) \\ 0 \end{bmatrix} \qquad (2'),$$

wobei die Soll-Position $\mathbf{r}_s(t)$ die Lage des TCPs gegenüber dem Ursprung des Bezugssystems im Arbeitsraum in kartesischen Koordinaten (x, y, z) und seine Orientierung gegenüber dem Bezugssystem in KARDAN-Winkeln ($\alpha$, $\beta$, $\gamma$) definiert (vgl. (3)).

Während des Abfahrens der Bahn bestimmt ein Interpolator zu dem in Fig. 1 dargestellten Zeitpunkt t = 0,5T bei vertikalem Arm online das Soll-Inkrement $\Delta q$ des Gelenkwinkels q um die y-Achse, um die in einem Zeitinkrement $\Delta t$ die aktuelle Position des Manipulators zu ändern ist, um diese Soll-Bahn abzufahren. Hierzu bestimmt der Interpolator in einem Schritt S20 (vgl. Fig. 2) für das Zeitinkrement

$$\Delta t = \frac{T}{4}$$

zunächst durch Auswertung der gespeicherten Funktion eine Soll-Bewegung $\Delta \mathbf{r}_s(t)$:

$$\Delta \mathbf{r}_s\left(\frac{T}{2}\right) = \begin{bmatrix} \frac{1}{\sqrt{2}} \\ 0 \\ \frac{1}{\sqrt{2}} \\ 0 \\ -\frac{\pi}{4} \\ 0 \end{bmatrix} - \begin{bmatrix} 0 \\ 0 \\ 1 \\ 0 \\ -\frac{\pi}{2} \\ 0 \end{bmatrix} = \begin{bmatrix} \frac{1}{\sqrt{2}} \\ 0 \\ \frac{1-\sqrt{2}}{\sqrt{2}} \\ 0 \\ \frac{\pi}{4} \\ 0 \end{bmatrix} \qquad (6')$$

In einem (nicht dargestellten) Schritt S25 wird hieraus nach Gleichung (7) ein vorläufiges Achswinkelupdate $\Delta \widetilde{q}_s\left(\frac{T}{2}\right) = \frac{\pi}{4}$ bestimmt, indem beispielsweise nur die Orientierung berücksichtigt wird.

Erfindungsgemäß wird das eigentliche Soll-Inkrement $\Delta q_s\left(\frac{T}{2}\right)$ während des Abfahrens der Bahn auf Basis der Dynamik des Manipulators bestimmt. Diese kann modelliert werden durch die Bewegungsgleichung

$$\underbrace{ml^2}_{\mathbf{M}} \cdot \frac{d^2q}{dt^2} + \underbrace{m \cdot l \cdot g \cdot \cos(q)}_{\mathbf{h}\left(q, \frac{dq}{dt}\right)} = \tau \qquad (8')$$

mit der im TCP konzentrierten Armmasse m = 1kg, der Armlänge l = 1m, der Gravitationskonstanten g und dem im Gelenk wirkenden Antriebsmoment $\tau$.

Indem die Bewegungsgleichung und die Zeitableitungen gemäß (9.1) bis (9.3) linearisiert werden, kann daher in einem Schritt S30 unter Auswertung des Modells (8') des Manipulators bestimmt werden, ob das zur Umsetzung des vorläufigen Achswinkelupdates $\Delta \widetilde{q}_s\left(\frac{T}{2}\right)$ erforderliche Antriebsmoment $\tau$ zulässige Antriebsbegrenzungen übersteigen:

$$\tau_{min} \leq \tau = m \cdot \left[ \frac{\Delta \widetilde{q}_s\left(\frac{T}{2}\right)}{\Delta t^2} - \frac{\left.\frac{dq}{dt}\right|_{\frac{T}{2}}}{\Delta t} \right] \leq \tau_{max} \qquad (10')$$

mit der - beispielsweise gemessenen - Gelenkgeschwindigkeit im Zeitpunkt 0,5T $\left.\frac{dq}{dt}\right|_{\frac{T}{2}}$. Liegt das zur Realisierung des vorläufigen Achswinkelupdates erforderliche Antriebsmoment zulässige Antriebsbegrenzungen innerhalb des zulässigen Bereichs [$\tau_{min}$, $\tau_{max}$] ("J" in S30), kann es direkt als eigentliches Soll-Inkrement $\Delta q_s\left(\frac{T}{2}\right)$ bestimmt werden:

$$\Delta q_s\left(\frac{T}{2}\right) \leftarrow \Delta \tilde{q}_s\left(\frac{T}{2}\right) \quad \text{(S50)}$$

Übersteigt hingegen das zur Realisierung des vorläufigen Achswinkelupdates erforderliche Antriebsmoment zulässige Antriebsbegrenzungen ("N" in S30), wird das Soll-Inkrement derart bestimmt, dass es von der Soll-Bewegung in der durch Gleichung (11) oder (11a, b) vorgegebenen Weise abweicht, so dass die Soll-Bewegung, wie sie sich aus der Auswertung der gespeicherten Soll-Bahn ergibt, solange verkürzt wird, bis das erforderliche Antriebsmoment $\tau$ innerhalb des zulässigen Bereiches liegt.

Hierzu werden in einem Schritt S40 der Parameter $\vartheta$ und das Soll-Inkrement $\Delta q_s\left(\frac{T}{2}\right)$ derart bestimmt, dass die mit w gewichtete Summe aus dem Betrag der Abweichung

$$\mathbf{\Psi}_1 = (1 - \vartheta)\cdot \Delta \mathbf{r}_s(t) - \mathbf{J}[q(t)]\cdot \Delta q_s(t) \quad \text{(12.1a')}$$

oder

$$\mathbf{\Psi}_1 = (1 - \vartheta_1)\cdot \Delta \mathbf{r}_s(t) + \vartheta_2 \cdot \mathbf{n}_{\Delta \mathbf{r}}(t) + \vartheta_3 \cdot \mathbf{b}_{\Delta \mathbf{r}}(t) - \mathbf{J}[q(t)]\cdot \Delta q_s(t) \quad \text{(12.1b')}$$

zwischen Soll-Bewegung und Soll-Inkrementen und aus dem negativen Wert der Reserve

$$\Psi_2 = m\cdot\left[\frac{\Delta q_s\left(\frac{T}{2}\right)}{\Delta t^2} - \frac{\left.\dfrac{dq}{dt}\right|_{\frac{T}{2}}}{\Delta t}\right] - \tau_{zul} \quad \text{(12.2')}$$

zwischen zulässigem und erforderliche Antriebsmoment, i.e. die Gütefunktion

$$w_1\cdot|\mathbf{\Psi}_1| - w_2\cdot\Psi_2, \quad w_1, w_2 \geq 0$$

minimal wird. Natürlich können Gleichungen (12.1'), (12.2') auch als Straffunktionen, Gleichheits- oder Ungleichheitsnebenbedingungen berücksichtigt werden. Dabei beschreibt mit dem Normalen- und dem Binormalenvektor $\mathbf{n}_{\Delta \mathbf{r}}(t)$, $\mathbf{b}_{\Delta \mathbf{r}}(t)$ die Abbildung $(1-\vartheta_1)\cdot\Delta\mathbf{r}_s(t)+\vartheta_2\cdot\mathbf{n}_{\Delta \mathbf{r}}(t)+\vartheta_3\cdot\mathbf{b}_{\Delta \mathbf{r}}(t)$ eine Abweichung des Soll-Inkrements von der Soll-Bewegung in einem durch Obergrenzen für $\vartheta_2, \vartheta_3$ vorgegebenen Schlauch um die Soll-Bewegung $\Delta\mathbf{r}_s$.

Der Optimierer verkürzt, je nach Gewichtung w, also das Soll-Inkrement durch den bzw. die Skalierungsfaktoren $\vartheta$ solange, bis bei minimal notwendiger Abweichung von der Soll-Bewegung eine ausreichende Reserve im Antriebsmoment vorliegt, die gegebenenfalls auch gleich Null sein kann, so dass das zur Verfügung stehende Antriebsmoment voll ausgenutzt wird (S70). Dieses Soll-Inkrement wird einem PID-Gelenkregler zugeführt, der den Roboter 1 daraufhin entsprechend bewegt.

Alternativ könnte in einer nicht dargestellten Abwandlung im Optimierer auch die Geschwindigkeit solange reduziert werden, bis eine ausreichende Reserve im Antriebsmoment vorliegt.

Findet der Optimierer keine zulässige Lösung (S60: "J"), wird eine entsprechende Meldung ausgegeben und das Abfahren der Bahn gestoppt (S80).

In einer ebenfalls nicht dargestellten Abwandlung kann Schritt S30 entfallen. Denn falls die erforderliche Reserve im Antriebsmoment auch bei voller Soll-Bewegung eingehalten wird, bestimmt der Optimierer bei entsprechender Gewichtung in Schritt S40 mit $\vartheta = 0$ das vorläufige Achswinkelupdate als Soll-Inkrement $\Delta q_s\left(\dfrac{T}{2}\right)$. Die Vorab-Prüfung in Schritt 30 ist gleichwohl vorteilhaft, da zum einen das vorläufige Achswinkelupdate effektiver bestimmt und zum anderen auf einfache Weise sichergestellt werden kann, dass die Steuerung nicht zugunsten einer unnötig großen Reserve im Antriebsmoment die Soll-Bewegung unnötig verkürzt.

**Patentansprüche**

1.  Verfahren zur Steuerung eines Manipulators, insbesondere eines Roboters, mit den Schritten:

    (S10): Abspeichern einer Soll-Bahn ($r_s[s(t)]$); und
    (S50, S70): Bestimmen von Soll-Inkrementen ($\Delta q_s[s(t)]$) während des Abfahrens der Bahn;

    **dadurch gekennzeichnet, dass**
    die Soll-Inkremente während des Abfahrens der Bahn auf Basis der Dynamik des Manipulators bestimmt werden, wobei
    zur Bestimmung der Soll-Inkremente während des Abfahrens der Bahn ein, insbesondere linearisiertes, Modell

    $$\left( \mathbb{M} \cdot \frac{d^2 \mathbb{q}(t)}{dt^2} + \mathbb{h}\left( \mathbb{q}(t), \frac{d\mathbb{q}(t)}{dt} \right) = \boldsymbol{\tau} \right)$$ des Manipulators ausgewertet wird, wobei

    während des Abfahrens der Bahn eine Soll-Bewegung ($\Delta r_s[s(t)]$) für ein Zeitinkrement ($\Delta t$), insbesondere durch Interpolation zwischen gespeicherten Positionen oder Gelenkkoordinaten oder durch Auswertung einer gespeicherten Funktion, bestimmt wird (S20), und Soll-Inkremente ($\Delta q_s[s(t)]$) auf Basis der Dynamik des Manipulators und dieser Soll-Bewegung bestimmt werden, wobei
    die bestimmten Soll-Inkremente ($\Delta q_s[s(t)]$) von der Soll-Bewegung ($\Delta r_s[s(t)]$) in vorgegebener Weise abweichen und/oder eine Soll-Geschwindigkeit $\left( \dfrac{\Delta \mathbb{q}_s(t)}{\Delta t} \right)$ für das Zeitinkrement ($\Delta t$) von einer Soll-Bewegungsgeschwindigkeit $\left( \dfrac{d\mathbb{q}}{dt}_s \right)$ in vorgegebener Weise abweicht, wenn zur Umsetzung der Soll-Bewegung erforderliche Antriebskräfte zulässige Antriebskräfte ($\tau_{zul}$) übersteigen und/oder wenn zur Umsetzung der Soll-Bewegung erforderliche Geschwindigkeiten zulässige Geschwindigkeiten ($v_{zul}$) übersteigen, wobei
    die von der Soll-Bewegung in vorgegebener Weise abweichenden Soll-Inkremente als, insbesondere lineare, Abbildung ($\Delta q_s(t) = \Phi(\Delta r_s(t))$) der Soll-Bewegung bestimmt werden, **dadurch gekennzeichnet, dass**
    die Soll-Inkremente ($\Delta q_s(t)$) innerhalb eines vorgegebenen Schlauches (($1 - \partial_1) \cdot \Delta r_s + \partial_2 \cdot n_{\Delta r} + \partial_3 \cdot b_{\Delta r}$)) um die Soll-Bewegung ($\Delta r_s(t)$) bestimmt werden.

2.  Verfahren nach Anspruch 1, **dadurch gekennzeichnet, dass** die gespeicherte Soll-Bahn($r_s$) Positionen ($r_{s,i}$), insbesondere Lagen ($[x_i, y_i, z_i]$) und/oder Orientierungen ($[\alpha_i, \beta_i, \gamma_i]$) eines manipulatorfesten Referenzkoordinatensystems (TCP), Gelenkkoordinaten ($[q_{1,i}, ... q_{a,i}]$) und/oder eine parametrisierte Funktion $\left( r_s[s(t)] = \sum_{i=0} a_i \cdot t^i \right)$ umfasst.

3.  Verfahren nach Anspruch 1, **dadurch gekennzeichnet, dass** auf Basis der Dynamik des Manipulators geprüft wird, ob zur Umsetzung der Soll-Bewegung erforderliche Antriebskräfte zulässige Antriebskräfte ($\tau_{zul}$) übersteigen (S30).

4.  Verfahren nach einem der vorhergehenden Ansprüche, **dadurch gekennzeichnet, dass** Soll-Inkremente durch eine Optimierung, insbesondere eine Mehrkriterienoptimierung, bestimmt werden.

5.  Verfahren nach Anspruch 4, **dadurch gekennzeichnet, dass** die Optimierung eine Abweichung (($1-$

$\partial$)$\cdot\Delta r_s(t)$-J[q(t)]$\cdot\Delta q_s(t)$ zwischen Soll-Bewegung und Soll-Inkrementen, eine Reserve

$(\mathbf{M}\cdot\dfrac{d^2\mathbf{q}(t)}{dt^2}+\mathbf{h}\left(\mathbf{q}(t),\dfrac{d\mathbf{q}(t)}{dt}\right)-\tau_{zul}^-)$ zwischen zur Umsetzung der Soll-Bewegung erforderlichen und zulässigen Antriebskräfte, eine Reserve $(\left|\mathbf{J}\cdot\dfrac{\Delta\mathbf{q}_s(t)}{\Delta t}\right|-v_{zul})$ zwischen Soll-Geschwindigkeit für das Zeitinkrement und einer zulässigen Geschwindigkeit, eine Abweichung $(\dfrac{\Delta\mathbf{q}_s(t)}{\Delta t}-\dfrac{d\mathbf{q}}{dt}_s)$ zwischen Soll-Geschwindigkeit für das Zeitinkrement und Soll-Gelenkgeschwindigkeit, eine Reserve zwischen durch Umsetzung der Soll-Inkremente eingenommenen und singulären Posen; zur Umsetzung der Soll-Bewegung erforderliche Antriebskräfte und/oder einen Abstand zwischen durch Umsetzung der Soll-Inkremente eingenommenen und bevorzugten Posen als Gütekriterium umfasst.

6. Verfahren nach einem der vorhergehenden Ansprüche 4 bis 5, **dadurch gekennzeichnet, dass** die Optimierung eines oder mehrerer Gütekriterien als Straffunktion und/oder eines oder mehrerer Gütekriterien als Gleichheits- oder Ungleichheitsnebenbedingung umfasst.

7. Verfahren nach einem der vorhergehenden Ansprüche 4 bis 6, **dadurch gekennzeichnet, dass** der Manipulator bezüglich der gespeicherten Soll-Bahn wenigstens abschnittsweise redundant ist.

8. Steuerung für einen Manipulator, insbesondere einen Roboter, mit:

   einem Speicher zum Abspeichern einer Soll-Bahn (r_s[s(t)]); und
   einem Interpolator zum Bestimmen von Soll-Inkrementen ($\Delta$q_s[s(t)]) während des Abfahrens der Bahn;
   **dadurch gekennzeichnet, dass**
   die Steuerung zur Durchführung eines Verfahrens nach einem der vorhergehenden Ansprüche eingerichtet ist.

9. Computerprogramm, das ein Verfahren nach einem der Ansprüche 1 bis 7 ausführt, wenn es in einer Steuerung nach Anspruch 8 abläuft.

10. Computerprogrammprodukt mit Programmcode, der auf einem maschinenlesbaren Träger gespeichert ist und ein Computerprogramm nach Anspruch 9 umfasst.

**Claims**

1. A method for operating a manipulator, in particular a robot, comprising the steps of:

   (S10): Storing of a nominal path (r_s[s(t)]); and
   (S50, S70): Determining of nominal increments ($\Delta$q_s[s(t)]) during moving along the path;
   **characterized in that**
   the nominal increments during said moving along the path are determined on the basis of the dynamics of the manipulator,
   wherein for determining the nominal increments during the moving along the path a, in particular linearized,

   model $(\mathbf{M}\cdot\dfrac{d^2\mathbf{q}(t)}{dt^2}+\mathbf{h}\left(\mathbf{q}(t),\dfrac{d\mathbf{q}(t)}{dt}\right)=\tau)$ of the manipulator is evaluated,

   wherein during the moving along the path a nominal movement ($\Delta$r_s[s(t)]) for a time increment ($\Delta$t), in particular by interpolation between stored positions or joint coordinates or by evaluation of a stored function, is determined (S20), and nominal increments ($\Delta$q_s[s(t)]) are determined on the basis of the dynamics of the manipulator and this nominal movement, wherein the determined nominal increments ($\Delta$q_s[s(t)]) deviate in a preset way from

the nominal movement ($\Delta r_s[s(t)]$) and/or a nominal velocity ($\frac{\Delta \mathbf{q}_s(t)}{\Delta t}$) for the time increment ($\Delta t$) deviates

from a nominal movement velocity ($\frac{d\mathbf{q}}{dt}_s$) in a preset way, if driving forces required for realizing the nominal movement exceed permissible driving forces ($\tau_{zul}$) and/or if velocities required for realizing the nominal movement exceed permissible velocities ($v_{zul}$),

wherein the nominal increments devianting from the nominal movement in a preset way are determined as, in particular linear, transformation ($\Delta q_s(t) = \Phi(\Delta r_s(t))$) of the nominal movement,
**characterized in that** the nominal increments ($\Delta q_s(t)$) are determined within a given tube ($(1-.\partial_1) \cdot \Delta r_s + \partial_2 \cdot n_{\Delta r} + \partial_3 \cdot b_{\Delta r}$)) around the nominal movement ($\Delta r_s(t)$).

2. A method according to claim 1, **characterized in that** the stored nominal path ($r_s$) comprises positions ($r_{s,\,i}$), in particular locations ($[x_i, y_i, z_i]$) and/or orientations ($[\alpha_i, \beta_i, \gamma_i]$) of a manipulator-fixed reference coordinate system (TCP), joint coordinates ($[q_{1,\,i},...q_{a,\,i}]$) and/or a parametrised function ($\mathbf{r}_s[s(t)] = \sum_{i=0} \mathbf{a}_i \cdot t^i$).

3. A method according to claim 1, **characterized in that** it is examined on the basis of the dynamics of the manipulator, whether driving forces required for the realization of the nominal movement exceed permissible driving forces ($\tau_{zul}$) (S30).

4. A method according to one of the preceding claims, **characterized in that** the nominal increments are determined by an optimization, in particular a multi-objective optimization.

5. A method according to claim 4, **characterized in that** the optimization comprises as quality criterion a deviation ($(1-\partial)\cdot\Delta r_s(t)-J[q(t)]\cdot\Delta q_s(t)$) between nominal movement and nominal increments, a reserve

$$(\mathbf{M} \cdot \frac{d^2\mathbf{q}(t)}{dt^2} + \mathbf{h}\left(\mathbf{q}(t), \frac{d\mathbf{q}(t)}{dt}\right) - \tau_{zul})$$ between driving forces required for realizing of the nominal movement and permissible driving forces, a reserve ($\left|\mathbf{J} \cdot \frac{\Delta \mathbf{q}_s(t)}{\Delta t}\right| - v_{zul}$) between nominal velocity for the time increment and a permissible velocity, a deviation ($\frac{\Delta \mathbf{q}_s(t)}{\Delta t} - \frac{d\mathbf{q}}{dt}_s$) between nominal velocity for the time increment and nominal joint velocity, a reserve between poses taken by realization of the nominal increments and singular poses, driving forces required for realizing the nominal movement and/or a distance between poses taken by realization of the nominal increments and preferred poses.

6. A method according to one of the preceding claims 4 to 5, **characterized in that** the optimization comprises one or more quality criteria as punitive functions and/or one or more quality criteria as equality or inequality constraints.

7. A method according to one of the preceding claims 4 to 6, **characterized in that** the manipulator is redundant with respect to the stored nominal path at least in sections.

8. A control for a manipulator, in particular a robot, with:

a memory for storing a nominal path ($r_s[s(t)]$); and
an interpolator for determining nominal increments ($\Delta q_s[s(t)]$) during moving along the path;
**characterized in that**
the control is arranged to carry out a method according to one of the preceding claims.

9. A computer program, that realizes a method according to one of the preceding claims 1 to 7, if said program runs in a control according to claim 8.

**10.** A computer program product with program code, which is stored on a machine-readable carrier and which comprises a computer program according to claim 9.

**Revendications**

**1.** Procédé de commande d'un manipulateur, en particulier d'un robot, comprenant les étapes :

(S10) : mémorisation d'un parcours théorique ($r_s[s(t)]$) ; et
(S50, S70) : détermination d'incréments théoriques ($\Delta q_s[s(t)]$) pendant que le parcours est suivi ;
**caractérisé en ce que**
les incréments théoriques, pendant que le parcours est suivi, sont déterminés sur la base de la dynamique du manipulateur,
un modèle, en particulier linéarisé,

$$\left( M \cdot \frac{d^2 q(t)}{dt^2} + h\left( q(t), \frac{dq(t)}{dt} \right) = \tau \right)$$

du manipulateur étant évalué pour la détermination des incréments théoriques pendant que le parcours est suivi, un mouvement théorique ($\Delta r_s[s(t)]$) pour un incrément de temps ($\Delta t$) étant déterminé (S20) en particulier par interpolation entre les positions ou les coordonnées d'articulation mémorisées ou par évaluation d'une fonction mémorisée, et des incréments théoriques ($\Delta q_s[s(t)]$) étant déterminés sur la base de la dynamique du manipulateur et de ce mouvement théorique,
les incréments théoriques ($\Delta q_s[s(t)]$) déterminés divergeant du mouvement théorique ($\Delta q_s[s(t)]$) d'une manière prédéterminée et/ou une vitesse théorique

$$\left( \frac{\Delta q_S(t)}{\Delta t} \right)$$

pour l'incrément de temps ($\Delta t$) divergeant d'une vitesse de mouvement théorique

$$\left( \frac{dq}{dt_S} \right)$$

d'une manière prédéterminée, lorsque les forces motrices nécessaires pour la conversion du mouvement théorique dépassent les forces motrices admissibles ($\square_{zul}$) et/ou lorsque les vitesses nécessaires pour la conversion du mouvement théorique dépassent les vitesses admissibles ($V_{zul}$),
les incréments théoriques divergeant du mouvement théorique de manière prédéterminée étant déterminés comme la représentation, en particulier linéaire, ($\Delta q_s(t) = \Phi(\Delta rs(t))$) du mouvement théorique, **caractérisé en ce que** les incréments théoriques ($\Delta q_s(t)$) sont déterminés à l'intérieur d'un tube prédéterminé (($1-\partial_1)\cdot\Delta r_s + \partial_2 \cdot n_{\Delta r} + \partial_3 \cdot b_{\Delta r}$)) le long du mouvement théorique ($\Delta r_s(t)$).

**2.** Procédé selon la revendication 1, **caractérisé en ce que** le parcours théorique mémorisé ($r_s$) comprend les positions ($r_{s, i}$), en particulier les positions ($[X_i, Y_i, Z_i]$) et/ou les orientations ($[\alpha_i, \beta_i, \gamma_i]$) d'un système de coordonnées de référence (TCP) fixé au manipulateur, les coordonnées d'articulation ($[q_{1, i} ... q_{a, i}]$) et/ou une fonction paramétrée

$$\left( r_S[s(t)] = \sum_{i=0} a_i \cdot t^i \right)$$

.

3. Procédé selon la revendication 1, **caractérisé en ce qu'**on vérifie sur la base de la dynamique du manipulateur si les forces motrices nécessaires pour la conversion du mouvement théorique dépassent les forces motrices admissibles ($\square_{zul}$) (S30).

4. Procédé selon l'une quelconque des revendications précédentes, **caractérisé en ce que** les incréments théoriques sont déterminés par une optimisation, en particulier une optimisation à critères multiples.

5. Procédé selon la revendication 4, **caractérisé en ce que** l'optimisation comprend un écart $((1-\partial)\cdot\Delta r_s(t)-J[q(t)]\cdot\Delta q_s(t)$ entre le mouvement théorique et les incréments théoriques, une réserve

$$(M \cdot \frac{d^2 q(t)}{dt^2} + h\left(q(t), \frac{dq(t)}{dt}\right) - \tau_{zul})$$

entre les forces motrices nécessaires pour la conversion du mouvement théorique et les forces motrices admissibles, une réserve

$$(|J \cdot \frac{\Delta q_s(t)}{\Delta t}| - v_{zul}$$

entre la vitesse théorique pour l'incrément de temps et une vitesse admissible, un écart

$$(\frac{\Delta q_s(t)}{\Delta t} - \frac{dq}{dt_s})$$

entre la vitesse théorique pour l'incrément de temps et la vitesse théorique, une réserve entre les poses occupées par la conversion des incréments théoriques et les poses singulières, les forces motrices nécessaires à la conversion du mouvement théorique et/ou un écart entre les poses occupées par la conversion des incréments théoriques et les poses préférées comme critère de qualité.

6. Procédé selon l'une quelconque des revendications 4 à 5 précédentes, **caractérisé en ce que** l'optimisation comprend un ou plusieurs critères de qualité comme fonction de peine et/ou un ou plusieurs critères de qualité comme condition secondaire d'égalité ou d'inégalité.

7. Procédé selon l'une quelconque des revendications 4 à 6, **caractérisé en ce que** le manipulateur, par rapport au parcours théorique mémorisé, est redondant au moins sur certaines parties.

8. Commande pour un manipulateur, en particulier un robot, comprenant :

une mémoire permettant de mémoriser un parcours théorique ($r_s[s(t)]$) ; et
un interpolateur permettant de déterminer les incréments théoriques ($\Delta q_s[s(t)]$) pendant que le parcours est suivi ;
**caractérisé en ce que**
la commande est conçue pour mettre en oeuvre un procédé selon l'une quelconque des revendications précédentes.

9. Programme informatique, qui met en oeuvre un procédé selon l'une quelconque des revendications 1 à 7, lorsqu'il se déroule dans une commande selon la revendication 8.

10. Produit-programme informatique comprenant un code de programme, qui est mémorisé sur un support lisible par ordinateur et comprend un programme informatique selon la revendication 9.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19959330 A1
- US 5811952 A
- WO 9729890 A1